# EUROPÄISCHE PATENTSCHRIFT

(11) **EP 1 507 983 B1**
(45) Veröffentlichungstag und Bekanntmachung des Hinweises auf die Patenterteilung: **21.02.2007**
(21) Anmeldenummer: 03740034.8
(22) Anmeldetag: 22.05.2003
(51) Int. Cl.: F16B 17/00

(54) **GEHÄUSE ZUR AUFNAHME EINES LAGERBAUTEILES UND VERFAHREN ZU DESSEN HERSTELLUNG**
HOUSING FOR RECEIVING A BEARING COMPONENT AND METHOD FOR PRODUCING THE SAME
SUPPORT DESTINE A RECEVOIR UN ELEMENT DE PALIER ET PROCEDE DE PRODUCTION DE CE SUPPORT

(30) Priorität: 24.05.2002 DE 10223306
(43) Veröffentlichungstag der Anmeldung: 23.02.2005
(73) Patentinhaber: ZF Lemförder Metallwaren AG, 49448 Lemförde (DE)
(72) Erfinder: LUSTIG, Wilfried, 49448 Hüde (DE); GERCKE, Matthias, 27257 Affinghausen (DE); MARQUARDT, Franz-Josef, 49080 Osnabrück (DE); KNOPP, Sören, 49179 Ostercappeln (DE); KUNZE, Ralf, 49152 Bad Essen (DE)
(86) Internationale Anmeldenummer: PCT/DE2003/001684
(87) Internationale Veröffentlichungsnummer: WO 2003/100270

(56) Entgegenhaltungen:
- GB-A- 2 162 472
- US-A- 1 576 874

## Beschreibung

Die Erfindung betrifft ein Gehäuse zur Aufnahme eines Lagerbauteiles gemäß dem Oberbegriff des Patentanspruchs 1 sowie ein Verfahren zur Herstellung eines derartigen Gehäuses entsprechend den nebengeordneten Verfahrensansprüchen 8 und 9.

Gehäuse der gattungsgemäßen Art sind aus dem Stand der Technik in unterschiedlicher Ausgestaltung bekannt und werden vorzugsweise als Bauteile für die Herstellung von Fahrwerkselementen in der Kraftfahrzeugindustrie benötigt. Die Verbindung zwischen dem Schaftansatz des Gehäuses und einem vorzugsweise rohrförmig ausgestalteten Hohlprofil kann dabei durch Verschweissen, Verschrauben oder Verpressen erfolgen. Beim Verpressen der Bauteile wird ein Rillenprofil am Schaftansatz rotationssymmetrisch zu dessen Mittellängsachse aufgebracht und beinhaltet eine Anzahl von nutenförmigen Vertiefungen. Bei der Verbindung zwischen Gehäuseschaftansatz und Rohrende wird die Innenfläche des Rohrhohlraumes mittels eines geeigneten Pressvorganges dem Rillenprofil des Schaftansatzes angepasst, so dass ein späteres Abziehen des Rohrendes vom Schaltansatz ausgeschlossen ist.

Diese Art der Pressverbindung hat sich zwar prinzipiell bewährt, besitzt jedoch in Bezug auf ihre Festigkeitseigenschaften systembedingte Nachteile. Diese bestehen im Wesentlichen darin, dass durch den Zerspanungsvorgang, im Rahmen dessen in den Schaftansatz das Rillenprofil eingebracht wird, eine signifikante Kerbwirkung im Übergangsbereich zwischen bearbeiteten Schaftansatz und dem Gehäuse mit seiner unbearbeiteten Oberfläche hervorgerufen wird, was sich bezüglich der Festigkeitseigenschaften des Gehäuseschaftansatzes negativ auswirkt. Darüber hinaus ist die Herstellung des Rillenprofils auf Grund seiner Bearbcitungszeit relativ aufwendig und somit mit nicht unerheblichem Kostenaufwand verbunden. Die rotationssymmetrische Gestaltung des Rillenprofils bietet darüber hinaus nur begrenzte Sicherheit gegen eine Verdrehung der Verbindung zwischen Gehäuseschaft und Rohrende bei einer Torsionsbeanspruchung der verbundenen Bauteile.

Derartige Lösungen sind beispielsweise aus der US-A-1,576,874 oder der GB-A-2162472 bekannt- Darin werden jeweils Gehäuse zur Aufnahme eines Lagerbauteiles mit einem kreisförmigen Schaftansatz offenbart, der in eine Ausnehmung eines Endbereiches eines Hohlprofiles einsetzbar und mit dem Endbereich verpressbar ist, wobei der kreisförmige Schaftansatz ein Rillenprofil aufweist, das im Umformverfahren oder im Urformverfahren hergestellt wurde.

Aufgabe der vorliegenden Erfindung ist es daher, ein gattungsgemäßes Gehäuse zur Aufnahme eines Lagerbauteiles bereitzustellen, welches erhöhten Anforderungen an die Festigkeit der Verbindung zwischen dem Schaftansatz des betreffenden Gehäuses und dem damit zu verbindenen Hohlprofil genügt. Darüber hinaus soll ergänzend die Aufgabe gelöst werden, eine Verdrehsicherung zwischen Gehäuseschaft und Hohlprofilende insbesondere bei erhöhten Torsionsbeanspruchungen bereitzustellen.

Die beschriebenen Aufgaben werden erfindungsgemäß bezüglich des Gehäuses durch die im kennzeichnenden Teil des Anspruche 1 sowie bezüglich des Verfahrens durch die im kennzeichnenden Teil der Ansprüche 8 und 9 offenbarte technische Lehre gelöst.

Nach der Erfindung wird das Einbringen des Rillenprofiles nicht mehr, wie aus dem Stand der Technik bekannt, im Rahmen eines Zerspanungsvorganges vorgenommen, sondern das Rillenprofil wird im Rahmen einer spanlosen Bearbeitung mittels eines Umformverfahrens oder mittels eines Urformverfahrens hergestellt, wobei das Rillenprofil eine Mehrzahl von in Axiallängsrichtung des Schaftansatzes nebeneinander angeordneten, über den Umfang des Schaftansatzes kreissegmentartig verteilten Vertiefungen aufweist.

Der Umformvorgang kann dabei mittels der Schmiedetechnik geschehen.

Darüber hinaus ist vorgesehen, das Rillenprofil im Gießverfahren herzustellen. Dieses Verfahren ist insbesondere für größere Stückzahlen preiswert, da eine Gesamtherstellung des Gehäusebauteiles mit Schaftansatz und Rillenprofil in einem Arbeitsgang erfolgen kann, ohne dass zusätzliche Herstellungsschritte zur separaten Rillenprofilgestaltung notwendig sind.
Soll das im Umform- bzw. Urformverfahren hergestellte Rillenprofil zusätzliche Festigkeit erlangen, so kann erfindungsgemäß die Festigkeit des Schaftansatzes durch zusätzliche Maßnahmen zur Einbringung von Druckeigenspannungen in die Randschicht des Rillenprofils, beispielweise durch Kugelstrahlen oder Kaltkalibrieren gesteigert werden.

Nachfolgend wird ein Ausführungsbeispiel des Gegenstandes der Erfindung anhand der beigefügten Zeichnungen näher erläutert.
Es zeigt:
- Figur 1: eine perspektivische Explosionsdarstellung des erfindungsgemäßen Gehäuses zusammen mit dem freien Ende eines damit zu verbindenden Hohlprofiles,
- Figur 2: eine Querschnittdarstellung des Schaftansatzes des Gehäuses entsprechend der Schnittlinie B-B aus Figur 1.

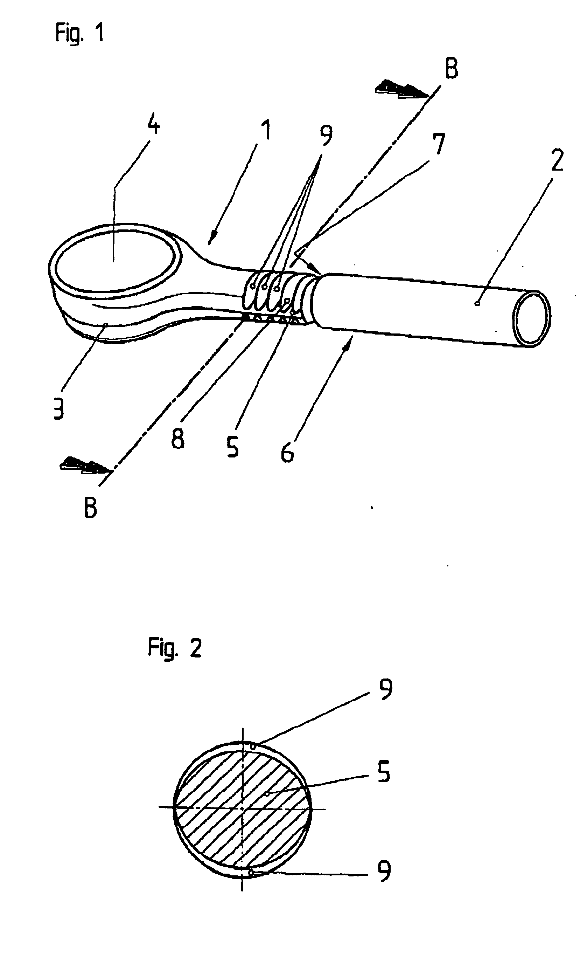

Das in der Figur 1 zusammen mit einem rohrförmigen Hohlprofil 2 dargestellte, in seiner Gesamtheit mit 1 bezeichnete Gehäuse besteht im Wesentlichen aus einem ringförmigen Aufnahmeelement 3 für ein in der Zeichnung nicht näher dargestelltes Lagerbauteil. Das Lagerbauteil wird in eine Durchgangsbohrung 4, welche im Aufnahmeelement 3 ausgespart ist, eingesetzt. Am ringförmigen Aufnahmeelement 3 befindet sich einseitig vorstehend ein Schaftansatz 5, der im Zusammenbauzustand zwischen Gehäuse und Hohlprofil in der im vorliegenden Fall ringförmigen Ausnehmung 7 des Endbereiches 6 des Hohlprofiles 2 aufgenommen ist. Das Außenmaß des im Querschnitt im Wesentlichen kreisförmigen Schaftansatzes 5 ist dabei so gewählt, dass dieser ohne Schwierigkeiten in die Ausnehmung 7 des Hohlprofiles 2 eingeschoben werden kann. Nach dem Einschieben wird durch eine geeignete Pressvorrichtung der Endbereich 6 des Hohlprofiles 2 zusammengepresst, wobei eine genügend hohe Kraftbeaufschlagung dazu führt, dass sich die Innenkontur der Ausnehmung 7 der Außenkontur des Schaftansatzes 5 anpasst. Diese Außenkontur des Schaftansatzes 5 ist mit einem Rillenprofil 8 versehen, welches aus einer Mehrzahl in Axiallängsrichtung des Schaftansatzes 5 nebeneinander angeordneter Vertiefungen 9 gebildet ist.

Wie der Darstellung der Figur 2 zu entnehmen ist, welche eine Querschnittsdarstellung entsprechend der Linie B-B der Figur 1 darstellt, sind in dem dargestellten Ausfiihrungsbeispiel entlang des Umfanges zwei Vertiefungen 9 kreissegmentartig an einander gegenüberliegenden Seiten des Schaftansatzes verteilt und erstrecken sich jeweils über einen Segmentwinkel von ca. 120°. Die kreissegmentartige Anordnung der Vertiefungen 9 bewirkt, dass nach dem Zusammenfügen des Hohlprofiles 2 mit dem Schaftansatz 5 des Gehäuses 1 und dem damit verbundenen Formschluss zwischen der Außenkontur des Schaftansatzes 5 und der Innenwandung des Hohlprofiles 2 eine in Folge von angreifenden Torsionskräften hervorgerufene Verdrehung zwischen den miteinander verbundenen Bauteilen zuverlässig ausgeschlossen wird.

Um im Bereich des Schaftansatzes 5 durch die Vertiefungen 9 hervorgerufene Kerbwirkungen zu vermeiden, werden die Vertiefungen 9 entweder im Umformverfahren oder im Rahmen eines Urformvorganges für das gesamte Gehäuse hergestellt. Beim Umformverfahren kann es sich beispielsweise um einen Schmiedevorgang, beim Urformvorgang um einen Gießvorgang handeln.

### Bezugszeichenliste:

- 1.: Gehäuse
- 2.: Hohlprofil
- 3.: Aufnahmeelement
- 4.: Durchgangsbohrung
- 5.: Schaftansatz
- 6.: Endbereich
- 7.: Ausnehmung
- 8.: Rillenprofil
- 9.: Vertiefung

## Patentansprüche

1. Gehäuse zur Aufnahme eines Lagerbauteiles mit einem kreisförmigen Schaftansatz (5), welcher in die Ausnehmung (7) des Endbereiches (6) eines Hohlprofiles (2) einsetzbar und mit dem Endbereich (6) verpressbar ist, wobei der kreisförmige Schaftansatz (5) mit einem Rillenprofil (8) versehen ist, das im Umformverfahren oder im Urformverfahren hergestellt ist, **dadurch gekennzeichnet, dass** das Rillenprofil (8) eine Mehrzahl von in Axiallängsrichtung des Schaftansatzes (5) nebeneinander angeordneten, über den Umfang des Schaftansatzes (5) kreissegmentartig verteilten Vertiefungen (9) aufweist.

2. Gehäuse zur Aufnahme eines Lagerbauteiles nach Anspruch 1, **dadurch gekennzeichnet, dass** das Umformverfahren einen Schmiedevorgang beinhaltet.

3. Gehäuse zur Aufnahme eines Lagerbauteiles nach Anspruch 1, **dadurch gekennzeichnet, dass** das Umformverfahren einen Schmiedevorgang und einen Vorgang zum Einbringen von Druckeigenspannungen in die Randschicht des Rillenprofiles beinhaltet.

4. Gehäuse zur Aufnahme eines Lagerbauteiles nach Anspruch 3, **dadurch gekennzeichnet, dass** das Urformverfahren einen Gießvorgang beinhaltet.

5. Gehäuse zur Aufnahme eines Lagerbauteiles nach Anspruch 4, **dadurch gekennzeichnet, dass** das Rillenprofil nach dem Urformvorgang Druckeigenspannungen in seiner Randschicht aufweist.

6. Gehäuse zur Aufnahme eines Lagerbauteiles nach einem der Ansprüche 1 bis 5, **dadurch gekennzeichnet, dass** die Kreissegmente eine Winkelausdehnung im Bereich von 80° bis 140° aufweisen.

7. Gehäuse zur Aufnahme eines Lagerbauteiles nach einem der Ansprüche 1 oder 6, **dadurch gekennzeichnet, dass** in Axiallängsrichtung des Schaftansatzes (5) drei bis acht Vertiefungen (9) nebeneinander angeordnet sind.

8. Verfahren zur Herstellung eines Gehäuses (1) nach einem der Ansprüche 1 bis 7, **dadurch gekennzeichnet, dass** der Umformvorgang einen Vorgang zum Einbringen von Druckeigenspannungen in die Randschicht des Rillenprofiles (8) beinhaltet.

9. Verfahren zur Herstellung eines Gehäuses (1) nach einem der Ansprüche 1 bis 7, **dadurch gekennzeichnet, dass** nach dem Gießprozess ein Vorgang zum einbringen von Druckeigenspannungen in die Randschicht des Rillenprofiles (8) vorgeschen ist.

10. Verfahren zur Herstellung eines Rillenprofiles nach Anspruch 9, **dadurch gekennzeichnet, dass** der Vorgang zum Einbringen von Druckeigenspannungen in die Randschicht des Rillenprofiles einen Kugelstrahlprozess beinhaltet.

11. Verfahren zur Herstellung eines Rillenprofiles nach Anspruch 9, **dadurch gekennzeichnet, dass** der Vorgang zum Einbringen von Druckeigenspannungen in die Randschicht des Rillenprofiles einen Kaltkalibrierprozess beinhaltet.

## Claims

1. Housing for receiving a bearing component with a circular shaft extension (5) which can be inserted in the recess (7) of the end region (6) of a hollow section (2) and pressed together with the end region (6), wherein the circular shaft extension (5) is provided with a groove profile (8) produced in a forming method or in a primary forming method, **characterised in that** the groove profile (8) comprises a plurality of depressions (9) which are disposed side by side in the axial longitudinal direction of the shaft extension (5) and distributed in a circular segment-like manner over the circumference of the shaft extension (5).

2. Housing for receiving a bearing component according to Claim 1, **characterised in that** the forming method includes a forging process.

3. Housing for receiving a bearing component according to Claim 1, **characterised in that** the forming method includes a forging process and a process for introducing internal compressive stresses into the skin of the groove profile.

4. Housing for receiving a bearing component according to Claim 3, **characterised in that** the primary forming method includes a casting process.

5. Housing for receiving a bearing component according to Claim 4, **characterised in that** the groove profile comprises internal compressive stresses in its skin after the primary forming process.

6. Housing for receiving a bearing component according to any one of Claims 1 to 5, **characterised in that** the circular segments have an angular extent in the range from 80° to 140°.

7. Housing for receiving a bearing component according to either of Claims 1 and 6, **characterised in that** three to eight depressions (9) are disposed side by side in the axial longitudinal direction of the shaft extension (5).

8. Method for producing a housing (1) according to any one of Claims 1 to 7, **characterised in that** the forming process includes a process for introducing internal compressive stresses into the skin of the groove profile (8).

9. Method for producing a housing (1) according to any one of Claims 1 to 7, **characterised in that** a process for introducing internal compressive stresses into the skin of the groove profile (8) is provided after the casting process.

10. Method for producing a groove profile according to Claim 9, **characterised in that** the process for introducing internal compressive stresses into the skin of the groove profile includes a shot peening process.

11. Method for producing a groove profile according to Claim 9, **characterised in that** the process for introducing internal compressive stresses into the skin of the groove profile includes a cold calibration process.

## Revendications

1. Boîtier destiné à recevoir un composant de palier, comprenant une partie de fût (5) de section circulaire, qui peut être insérée dans l'évidement (7) de la partie terminale (6) d'un profilé creux (2) et peut être reliée à la partie terminale (6) par sertissage, la partie de fût (5) de section circulaire étant pourvue d'un profil de rainures (8) produit par un procédé de déformation ou un procédé de formage initial,
**caractérisé en ce que** le profil de rainures (8) comprend une multitude de renfoncements (9) disposés les uns à côté des autres dans le sens de la longueur axiale de la partie de fût (5), formant des segments de cercles et répartis sur le pourtour de la partie de fût (5).

2. Boîtier destiné à recevoir un composant de palier selon la revendication 1, **caractérisé en ce que** le procédé de déformation comprend une opération de forgeage.

3. Boîtier destiné à recevoir un composant de palier selon la revendication 1, **caractérisé en ce que** le procédé de déformation comprend une opération de forgeage et une opération d'introduction de contraintes de compression internes dans la couche marginale du profil de rainures.

4. Boîtier destiné à recevoir un composant de palier selon la revendication 3, **caractérisé en ce que** le procédé de formage initial comprend une opération de moulage.

5. Boîtier destiné à recevoir un composant de palier selon la revendication 4, **caractérisé en ce qu'**à l'issue de l'opération de déformation, le profil de rainures présente des contraintes de compression internes dans sa couche marginale.

6. Boîtier destiné à recevoir un composant de palier selon l'une des revendications 1 à 5, **caractérisé en ce que** les segments de cercles présentent une étendue angulaire de l'ordre de 80° à 140°.

7. Boîtier destiné à recevoir un composant de palier selon l'une des revendications 1 à 6, **caractérisé en ce que** trois à huit renfoncements (9) sont disposés les uns à côté des autres dans le sens axial longitudinal de la partie de fût (5).

8. Procédé de fabrication d'un boîtier (1) selon l'une des revendications 1 à 7, **caractérisé en ce que** le procédé de déformation comprend une opération destinée à introduire des contraintes de compression internes dans la couche marginale du profil de rainures (8).

9. Procédé de fabrication d'un boîtier (1) selon l'une des revendications 1 à 7, **caractérisé en ce qu'**une opération destinée à introduire des contraintes de compression internes dans la couche marginale du profil de rainures (8) est prévue à l'issue du processus de moulage.

10. Procédé de fabrication d'un profil de rainures selon la revendication 9, **caractérisé en ce que** l'opération visant à introduire des contraintes de compression internes dans la couche marginale du profil de rainures comprend un processus de grenaillage.

11. Procédé de fabrication d'un profil de rainures selon la revendication 9, **caractérisé en ce que** l'opération visant à introduire des contraintes de compression internes dans la couche marginale du profil de rainures comprend un processus de calibrage à froid.
